# EUROPEAN PATENT SPECIFICATION

(11) **EP 2 048 995 B1**
(45) Date of publication and mention of the grant of the patent: **10.03.2010**
(21) Application number: 07804642.2
(22) Date of filing: 25.07.2007
(51) Int. Cl.: A47J 31/60

(54) **COFFEE MACHINE TANK CARTRIDGE FILTER**
FILTERPATRONE FÜR KAFFEEMASCHINENTANK
FILTRE À CARTOUCHE POUR RÉSERVOIR DE MACHINE À CAFÉ

(30) Priority: 25.07.2006 IT TO20060547
(43) Date of publication of application: 22.04.2009
(73) Proprietor: Lavazza S.P.A., 10154 Torino (IT)
(72) Inventor: CORTESE, Virginio, 10100 Torino (IT)
(74) Representative: Jorio, Paolo
(86) International application number: PCT/IB2007/002129
(87) International publication number: WO 2008/012657

(56) References cited:
- EP-A- 1 739 060
- US-A- 5 860 354
- US-A1- 2005 011 824

## Description

### TECHNICAL FIELD

The present invention relates to a coffee machine tank cartridge filter.

More specifically, the present invention relates to a coffee machine tank cartridge filter of the type comprising a container housing a filter medium and having at least one inlet for the water in the tank and a filtered-water outlet communicating with a feed conduit which feeds the water to a hydraulic circuit of the machine.

Cartridge filters of the above type are normally inserted removably at the bottom of the tank, and the water outlet is connected in fluidtight manner to a bottom opening in the tank, in turn connected to the hydraulic circuit feed conduit.

### BACKGROUND ART

Cartridge filters of the above type are described, for example, in Patent Applications EP1498060A1 and US 2005/011824A1

Known cartridge filters of the above type are unsuitable for use in coffee machines, in which the hydraulic circuit comprises a hydraulic cylinder operated by the water in the tank. In which case, once the coffee is made, the hydraulic cylinder is drained, and the backflow water, at relatively high pressure to begin with, is fed back into the tank instead of being discharged to the outside.

Using a known cartridge filter of the above type, the backflow water must be fed back to the tank by a separate conduit controlled by at least one one-way valve to prevent pressurized water from flowing the opposite way into the cartridge filter and generating pressure the cartridge filter is not designed to withstand.

### DISCLOSURE OF INVENTION

It is an object of the present invention to provide a cartridge filter of the above type, which is cheap and easy to produce, and is particularly suitable for use in the tank of a coffee machine comprising at least one hydraulic cylinder connected to the tank.

According to the present invention, there is provided a coffee machine tank cartridge filter as claimed in the independent Claim and, preferably, in any one of the following Claims depending directly or indirectly on the independent Claim.

### BRIEF DESCRIPTION OF THE DRAWINGS

A non-limiting embodiment of the invention will be described by way of example with reference to the accompanying drawings, in which:
Figure 1 shows a lateral section of a preferred embodiment of the cartridge filter according to the present invention;
Figure 2 shows a section along line II-II in Figure 1;
Figure 3 shows a detail of the Figure 1 filter in a different operating configuration;
Figure 4 shows a plan view of Figure 3.

### BEST MODE FOR CARRYING OUT THE INVENTION

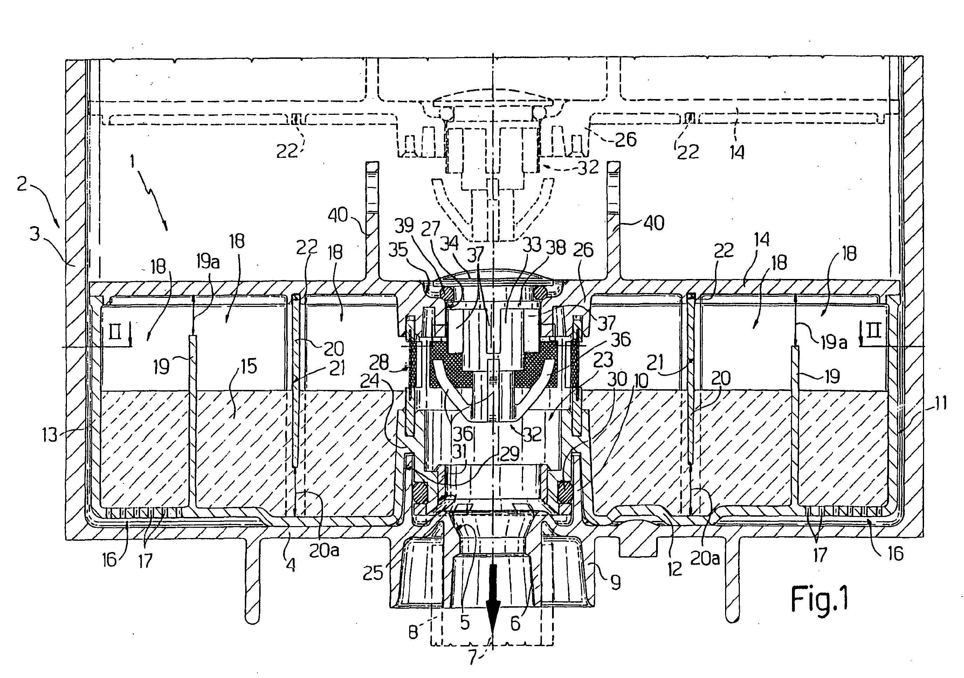

Number 1 in Figure 1 indicates as a whole a cartridge filter for a tank 2 of a coffee machine.

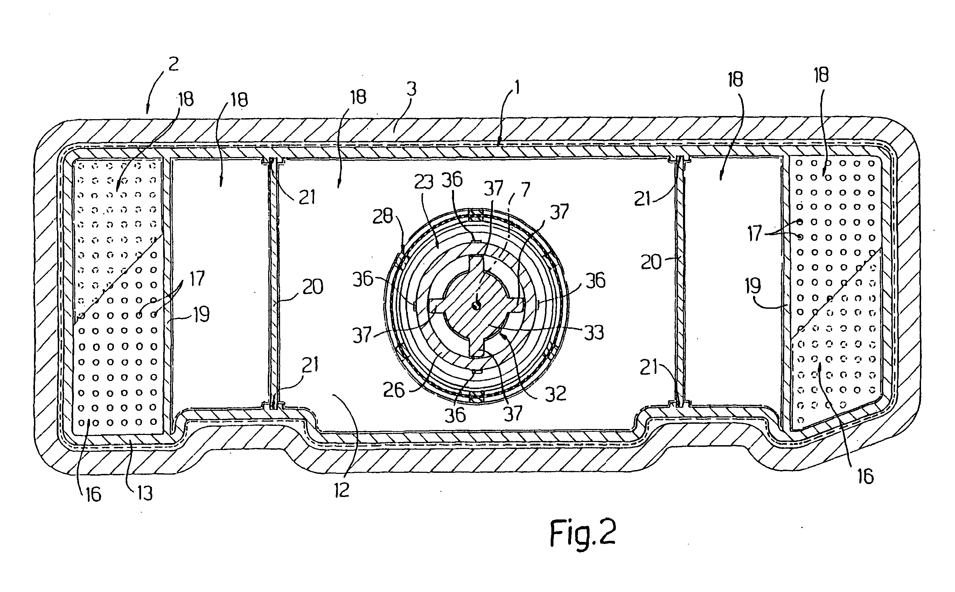

As shown in Figures 1 and 2, tank 2 is parallelepiped-shaped, and comprises a lateral wall 3, and a substantially rectangular bottom wall 4.

Bottom wall 4 has a central through hole 5 fitted peripherally with a tubular portion 6, which extends from bottom wall 4 along an axis 7 substantially perpendicular to bottom wall 4, and is connected in fluidtight manner to a feed conduit 8 of a known pump (not shown), which draws water from tank 2 and feeds it to a hydraulic circuit comprising, in addition to the pump, a known boiler (not shown), and a percolating assembly with a known hydraulic cylinder (not shown).

Bottom wall 4 is also fitted with an outer tubular appendix 9 coaxial with axis 7 and surrounding the whole of tubular portion 6; and an inner tubular appendix 10 coaxial with axis 7 and located on the opposite side of bottom wall 4 to tubular appendix 9 to define an interface by which to attach filter 1 to the bottom of tank 2.

Filter 1 is the same parallelepiped shape as tank 2, and comprises a casing 11 defined by a bottom wall 12, and by a lateral wall 13 fitted in fluidtight manner with a lid 14 closing casing 11.

Casing 11 contains a granular filter medium 15 of the type commonly used in food filters, e.g. ionexchange resin.

As shown in Figure 2, lateral wall 13 is detached from lateral wall 3 of tank 2 to define a gap about the whole of casing 11. Only a raised central portion of bottom wall 12 rests on bottom wall 4, and the lateral ends of bottom wall 12 are detached from bottom wall 4 so that the water in the tank flows freely to bottom wall 4 and into filter 1 through two inlets 16, each of which is defined by a number of through holes 17 formed, parallel to axis 7, through a respective lateral end of bottom wall 12, and of a maximum diameter smaller than the minimum diameter of the grains of filter medium 15 to prevent the grains escaping from filter 1.

The inside of casing 11 is divided into five chambers 18 by four vertical partitions integral with casing 11 and comprising two partitions 19, each located close to a respective inlet 16; and two partitions 20, each located between a respective partition 19 and axis 7. More specifically, as shown clearly in Figure 2, chambers 18 comprise two outer chambers 18 communicating with respective inlets 16; two intermediate chambers 18; and a central chamber 18 coaxial with axis 7.

As regards the level to which chambers 18 are filled with filter medium 15, it should be pointed out that the level shown in Figure 1 is purely indicative, may be higher or lower than shown, and is preferably roughly on a level with the top edge of partitions 19.

Each partition 19 is formed, normally moulded or cast, integrally with bottom wall 12 and lateral wall 13, and extends from bottom wall 12 towards lid 14 to define, with lid 14, a respective water passage 19a. Each partition 20, on the other hand, engages, irremovably and in fluidtight manner, a respective groove 21 formed in lateral wall 13, and extends from a top edge of casing 11 towards bottom wall 12 to define, with bottom wall 12, a respective water passage 20a.

As shown in Figure 1, lid 14 has two grooves 22 (clearly visible in the detached configuration of lid 14 shown by the dash line), each of which is engaged loosely by the top edge of a respective partition 20 to prevent water flow between lid 14 and partition 20.

The alternating arrangement of partitions 19 and 20 defines two labyrinth water flow paths, each of which extends from a respective inlet 16, through relative passages 19a and 20a to a cylindrical chamber 23, which is located in the centre of central chamber 18, is coaxial with axis 7, is separated from central chamber 18 by a member permeable to water, and is open on the side facing hole 5 to allow the filtered water to flow into feed conduit 8.

Chamber 23 also has another opening, which communicates in controlled manner with the inside of tank 2 and, as explained in detail below, allows feed conduit 8 to be used as a backflow conduit for the drain water of the hydraulic cylinder, and allows the backflow water to flow into the tank through chamber 23, without going through filter medium 15.

More specifically, with reference to Figures 1 and 2, chamber 23 is defined by a Bottom tubular member 24 connected to the periphery of an opening 25 formed, coaxially with axis 7, through bottom wall 12 and aligned with hole 5; by a top tubular member 26 connected to the periphery of an opening 27 formed, coaxially with axis 7, through lid 14; and by a cylindrical cage 28 interposed between bottom tubular member 24 and top tubular member 26 and closed laterally by a wall of material permeable to water, e.g. wire netting, which allows water flow from central chamber 18 to chamber 23, but prevents the resin grains from escaping.

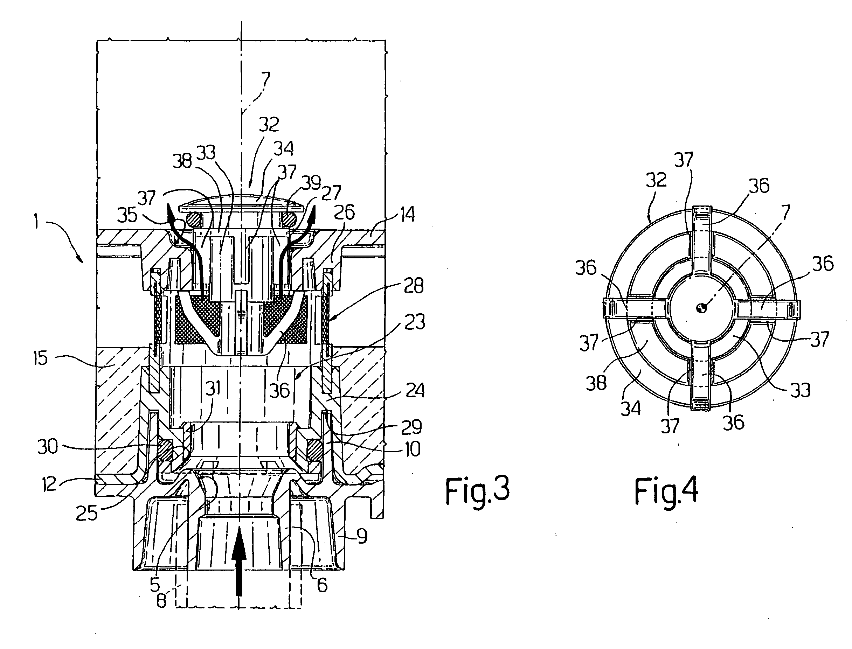

As shown in Figures 1 and 3, bottom tubular member 24 has, at the bottom, a cylindrical groove 29 coaxial with axis 7 and engaged by tubular appendix 10 of tank 2 to lock filter 1 removably to tank 2. A seal 30 is interposed between tubular appendix 10 and groove 29, is housed in an annular seat defined by a wider portion of groove 29, and is held in position by a ring 31 fitted to the end of bottom tubular member 24.

Top tubular member 26 forms part of a valve device comprising a one-way valve 32 inserted in sliding manner through opening 27 of top tubular member 26 to allow backflow into tank 2 of the hydraulic circuit drain water fed to chamber 23.

As shown in Figures 1 and 3, valve 32 is movable between a lowered closed position (Figure 1) closing opening 27 and corresponding to a rest condition of filter 1 or a water intake condition; and a raised open position (Figure 3) corresponding to a hydraulic circuit drain condition and backflow of water from feed conduit 8 to tank 2.

More specifically, with reference to Figures 1, 2 and 4, valve 32 comprises a cylindrical body 33 coaxial with axis 7; a head 34 connected to the top end of cylindrical body 33 and housed, when valve 32 is in the closed position, inside a wider portion 35 of opening 27; and an axial stop device connected to the bottom end of cylindrical body 33 and defined by four curved arms 36, which extend from the end of cylindrical body 33 towards top tubular member 26, are detached from top tubular member 26 (Figure 1) when the valve is closed, and are positioned contacting top tubular member 26 to arrest axial upward movement of valve 32, when the valve is open.

Arms 36 are made of sufficiently elastic material to flex through opening 27 when the detached lid 14 (shown by the dash line in Figure 1) is fitted to casing 11.

Cylindrical body 33 of valve 32 is fitted with a device for guiding valve 32 along axis 7, and which is defined by four ribs 37 equally spaced about axis 7 and projecting radially from cylindrical body 33 to guide cylindrical body 33 through top tubular member 26, and to define four flow channels for the water from chamber 23 when valve 32 is in the raised position (Figure 3).

Ribs 37 are connected to one another by a circular flange 38 of substantially the same diameter as opening 27, and which is positioned facing a bottom surface of head 34 to define, with head 34, an annular seat for an annular seal 39.

On opposite sides of axis 7 and close to opening 27, lid 14 is fitted with two brackets 40, which are engaged by a gripping device (not shown) to allow the user to withdraw filter 1 from tank 2 to change filter 1 or clean tank 2.

Operation of filter 1 will now be described as of a rest configuration of filter 1 (Figure 1), in which valve 32 is in the lowered closed position.

As stated, the lowered position of valve 32, when filter 1 is in the rest configuration, is also maintained when the hydraulic circuit pump (not shown) is activated at the start of the coffee-making cycle.

The water in tank 2 is sucked into filter 1 through inlets 16, flows through filter medium 15, and seeps through the lateral wall of cage 28 into chamber 23 and out into feed conduit 8.

At the end of the coffee-making cycle, the pump is stopped, and the drain water of the hydraulic cylinder flows into chamber 23 along feed conduit 8.

Given its initial relatively high pressure, the drain water of the hydraulic cylinder pushes valve 32 up into the raised position (Figure 3), so as to flow out of chamber 23 into tank 2.

Once the hydraulic cylinder is drained, valve 32 drops back under its own weight into the lowered configuration.

In a variation (not shown) of filter 1, casing 11 may have only one inlet 16 and/or inlet 16 may be formed in a bottom portion of lateral wall 13, as opposed to bottom wall 12.

It should be pointed out that the advantage of filter 1 according to the present invention lies not only in allowing backflow of water into tank 2 through filter 1 itself, with no need for additional drain conduits immersed in tank 2, but also in rapidly achieving maximum efficiency of a new filter 1.

That is, valve 32 provides for rapidly expelling, through valve 32 itself, any air bubbles formed between the resin grains, when filter 1 is immersed for the first time in tank 2, and which, by preventing the water from flowing completely over the grains, would inevitably reduce the efficiency of filter 1, at least for the number of operating cycles necessary to gradually expel the air in the filtered water issuing from filter 1.

Filter 1 also has the advantage of better controlling the regulation hardness level prescribed for filtered water for human consumption.

That is, though cartridge filters of the type according to the present invention are normally designed to achieve the right degree of hardness of the water, excessive, hard-to-control filtration by filter 1 frequently occurs, thus resulting in a below-standard final hardness level.

Experience has shown valve 32 provides for solving this problem. That is, because seal 39 of valve 32 allows water to seep from tank 2 into chamber 23 when drawing in water, a minimum amount of non-filtered, i.e. harder, water can be added to the water softened by passing through filter medium 15.

## Claims

1. A cartridge filter for a coffee machine tank (2), the filter (1) comprising a container (11, 14) housing a filter medium (15) and having at least one inlet (16) for the water in the tank (2) and a filtered-water outlet (25) communicating with a feed conduit (8) for feeding the water to a hydraulic circuit of the machine; the filter (1) being **characterized in that** said outlet (25) also acts as an inlet for the backflow water of the hydraulic circuit; and by comprising an inner chamber (23), which is separated, by a member (28) permeable to water, from the rest of the filter (1) containing the filter medium (15), and communicates, on one side, with the feed conduit (8) via the outlet (25), and, on the other side, with the inside of the tank (2) via an opening (27) controlled by a one-way valve (32) permitting outflow of the backflow water from the chamber (23).

2. A filter as claimed in Claim 1, wherein the outlet (25) is formed in a bottom wall (12) of the container (11, 14), and the opening (27) is formed through a top wall (14) of the container (11, 14).

3. A filter as claimed in Claim 1 or 2, wherein the container (11, 14) comprises a casing (11) defined by a lateral wall (13) and by a bottom wall (12) through which the outlet (25) is formed, and the casing is closed in fluidtight manner by a lid (14) through which the opening (27) is formed.

4. A filter as claimed in Claim 3, wherein the chamber (23) is substantially cylindrical, and has a substantially vertical longitudinal axis (7); the outlet (25) and the opening (27) being aligned along the longitudinal axis (7).

5. A filter as claimed in Claim 4, wherein the chamber (23) is defined by a first tubular member (24) connected to the periphery of the outlet (25) and extending along the longitudinal axis (7) towards the lid (14); a second tubular member (26) connected to the periphery of the opening (27) and extending along the longitudinal axis (7) towards the bottom wall (12); and a third tubular member (28) interposed between the first and second tubular member (24, 26) and defining the member (28) permeable to water.

6. A filter as claimed in Claim 5, wherein the one-way valve (32) is fitted to the second tubular member (26) to move, along the longitudinal axis (7), between a lowered position closing the opening (27), and a raised position wherein the opening (27) is partly open to permit outflow of water from the chamber (23) to the tank (2).

7. A filter as claimed in Claim 6, wherein the valve (32) comprises a substantially cylindrical body (33) having radial ribs (37) for guiding the valve (32) along the second tubular member (26), and which define respective passages for outflow of the water from the chamber (23) when the valve (32) is in the raised position.

8. A filter as claimed in any one of Claims 3 to 7, wherein the outlet (25) is formed in a central portion of the bottom wall (12), and two inlets (16) for the water in the tank (2) are formed on opposite sides of the outlet (25), in two end portions of the bottom wall (12).

9. A filter as claimed in Claim 8, wherein the container (11, 14) is divided internally by a number of substantially vertical partitions (19, 20) defining a respective labyrinth water flow path between each inlet (16) and the chamber (23).

10. A filter as claimed in Claim 9, wherein the partitions (19, 20) are all integral with the casing (11), and comprise first partitions (19) extending from the bottom wall (12) towards the lid (14) to define, with the lid (14), respective water passages (19a); and second partitions (20) extending from the lid (14) towards the bottom wall (12) to define, with the bottom wall (12), respective water passages (20a).

11. A coffee machine comprising a cartridge filter (1) as claimed in any one of Claims 1 to 10.

## Patentansprüche

1. Patronenfilter für einen Kaffeemaschinentank (2), wobei der Filter (1) einen Behälter (11, 14) umfasst, der ein Filtermedium (15) beherbergt und wenigstens einen Einlass (16) für das Wasser im Tank (2) und einen Auslass für gefiltertes Wasser (25) aufweist, der mit einer Zuführleitung (8) in Verbindung steht, um das Wasser einem Hydraulikkreis der Maschine zuzuführen; wobei der Filter (1) **dadurch gekennzeichnet ist, dass** der Auslass (25) auch als ein Einlass für das Rückflusswasser des Hydraulikkreises fungiert; und dass er eine Innenkammer (23) umfasst, die durch ein wasserdurchlässiges Element (28) vom Rest des Filters (1) getrennt ist, der das Filtermedium (15) enthält, und auf einer Seite mit der Zuführleitung (8) über den Auslass (25) und auf der anderen Seite mit dem Inneren des Tanks (2) über eine Öffnung (27) in Verbindung steht, der durch ein Einwegeventil (32) gesteuert wird, das einen Ausfluss des Rückflusswassers aus der Kammer (23) erlaubt.

2. Filter gemäß Anspruch 1, wobei der Auslass (25) in einer Bodenwand (12) des Behälters (11, 14) gebildet ist, und die Öffnung (27) durch eine obere Wand (14) des Behälters (11, 14) gebildet ist.

3. Filter gemäß Anspruch 1 oder 2, wobei der Behälter (11, 14) ein Gehäuse (11) umfasst, das durch eine Seitenwand (13) und durch eine Bodenwand (12) festgelegt ist, durch die der Auslass (25) gebildet ist und das Gehäuse fluiddicht durch einen Deckel (14) geschlossen ist, durch den die Öffnung (27) gebildet ist.

4. Filter gemäß Anspruch 3, wobei die Kammer (23) im Wesentlichen zylindrisch ist und eine im Wesentlichen vertikale Längsachse (7) aufweist; wobei der Auslass (25) und die Öffnung (27) entlang der Längsachse (7) ausgerichtet sind.

5. Filter gemäß Anspruch 4, wobei die Kammer (23) durch ein erstes rohrförmiges Element (24) festgelegt ist, das mit dem Umfang des Auslasses (25) verbunden ist und sich entlang der Längsachse (7) in Richtung des Deckels (14) erstreckt; ein zweites rohrförmiges Element (26), das mit der Umgebung der Öffnung (27) verbunden ist und sich entlang der Längsachse (7) in Richtung der Bodenwand (12) erstreckt; und ein drittes rohrförmiges Element (28), das zwischen das erste und zweite rohrförmige Element (24, 26) gestellt ist und das wasserdurchlässige Element (28) festlegt.

6. Filter gemäß Anspruch 5, wobei das Einwegeventil (32) in das zweite rohrförmige Element (26) gepasst ist, um sich entlang der Längsachse (7) zwischen einer abgesenkten Position, die die Öffnung (27) schließt, und einer erhobenen Position zu bewegen, wobei die Öffnung (27) teilweise offen ist, um einen Ausfluss von Wasser aus der Kammer (23) in den Tank (2) zu erlauben.

7. Filter gemäß Anspruch 6, wobei das Ventil (32) einen im Wesentlichen zylindrischen Körper (33) aufweist, der radiale Rippen (37) zum Führen des Ventils (32) entlang des zweiten Rohrelements (26) aufweist, und die jeweilige Durchgänge zum Ausfluss des Wassers aus der Kammer (23) festlegen, wenn das Ventil (32) in der erhobenen Position ist.

8. Filter gemäß einem der Ansprüche 3 bis 7, wobei der Auslass (25) in einem Mittelbereich der Bodenwand (12) gebildet ist, und zwei Einlässe (16) für das Wasser im Tank (2) auf gegenüberliegenden Seiten des Auslasses (25) in zwei Endabschnitten der Bodenwand (12) gebildet sind.

9. Filter gemäß Anspruch 8, wobei der Behälter (11, 14) innen durch eine Anzahl im Wesentlichen vertikaler Trennwände (19, 20) geteilt ist, die einen jeweiligen Labyrinthwasserflusspfad zwischen jedem Einlass (16) und der Kammer (23) festlegen.

10. Filter gemäß Anspruch 9, wobei die Trennwände (19, 20) alle einstückig mit dem Gehäuse (11) sind und erste Trennwände (19) umfassen, die sich von der Bodenwand (12) in Richtung des Deckels (14) erstrecken, um mit dem Deckel (14) jeweilige Wasserdurchgänge (19a) festzulegen; sowie zweite Trennwände (20), die sich von dem Deckel (14) in Richtung der Bodenwand (12) erstrecken, um mit der Bodenwand (12) jeweilige Wasserdurchgänge (20a) festzulegen.

11. Kaffeemaschine mit einem Patronenfilter (1) gemäß einem der Ansprüche 1 bis 10.

## Revendications

1. Filtre à cartouche pour un réservoir de machine à café (2), le filtre (1) comprenant un récipient (11, 14) contenant un milieu filtrant (15) et comportant au moins une entrée (16) pour l'eau dans le réservoir (2) et une sortie d'eau filtrée (25) en communication avec un conduit d'alimentation (8) pour alimenter l'eau à un circuit hydraulique de la machine ; le filtre (1) étant **caractérisé en ce que** ladite sortie (25) sert également d'entrée pour l'eau de retour du circuit hydraulique ; et **en ce qu'**il comprend une chambre intérieure (23) qui est séparée, par un élément (28) perméable à l'eau, du reste du filtre (1) contenant le milieu filtrant (15), et communique, sur un côté, avec le conduit d'alimentation (8) par l'intermédiaire de la sortie (25), et, sur l'autre côté, avec l'intérieur du réservoir (2) par l'intermédiaire d'une ouverture (27) commandée par un clapet antiretour (32) permettant l'écoulement de l'eau de retour depuis la chambre (23).

2. Filtre selon la revendication 1, dans lequel la sortie (25) est formée dans une paroi inférieure (12) du récipient (11, 14), et l'ouverture (27) est formée à travers une paroi supérieure (14) du récipient (11, 14).

3. Filtre selon la revendication 1 ou 2, dans lequel le récipient (11, 14) comprend un boîtier (11) défini par une paroi latérale (13) et par une paroi inférieure (12) à travers lesquelles la sortie (25) est formée, et le boîtier est fermé de manière étanche par un couvercle (14) à travers lequel l'ouverture (27) est formée.

4. Filtre selon la revendication 3, dans lequel la chambre (23) est sensiblement cylindrique, et comporte un axe longitudinal (7) sensiblement vertical ; la sortie (25) et l'ouverture (27) étant alignées le long de l'axe longitudinal (7).

5. Filtre selon la revendication 4, dans lequel la chambre (23) est définie par un premier élément tubulaire (24) raccordé à la périphérie de la sortie (25) et s'étendant le long de l'axe longitudinal (7) vers le couvercle (14) ; un deuxième élément tubulaire (26) raccordé à la périphérie de l'ouverture (27) et s'étendant le long de l'axe longitudinal (7) vers la paroi inférieure (12) ; et un troisième élément tubulaire (28) intercalé entre le premier élément tubulaire et le deuxième élément tubulaire (24, 26) et définissant l'élément (28) perméable à l'eau.

6. Filtre selon la revendication 5, dans lequel le clapet antiretour (32) est disposé sur le deuxième élément tubulaire (26) pour se déplacer, le long de l'axe longitudinal (7), entre une position abaissée fermant l'ouverture (27), et une position relevée dans laquelle l'ouverture (27) est partiellement ouverte pour permettre l'écoulement d'eau depuis la chambre (23) jusqu'au réservoir (2).

7. Filtre selon la revendication 6, dans lequel le clapet (32) comprend un corps (33) sensiblement cylindrique comportant des nervures (37) radiales pour guider le clapet (32) le long du deuxième élément tubulaire (26), et qui définissent des passages respectifs pour l'écoulement de l'eau depuis la chambre (23) quand le clapet (32) est dans la position relevée.

8. Filtre selon l'une quelconque des revendications 3 à 7, dans lequel la sortie (25) est formée dans une partie centrale de la paroi inférieure (12), et deux entrées (16) pour l'eau dans le réservoir (2) sont formées sur des côtés opposés de la sortie (25), dans deux parties d'extrémité de la paroi inférieure (12).

9. Filtre selon la revendication 8, dans lequel l'intérieur du récipient (11, 14) est divisé par plusieurs cloisons (19, 20) sensiblement verticales définissant un trajet d'écoulement d'eau labyrinthique respectif entre chaque entrée (16) et la chambre (23).

10. Filtre selon la revendication 9, dans lequel les cloisons (19, 20) sont toutes d'un seul tenant avec le boîtier (11), et comprennent des premières cloisons (19) s'étendant depuis la paroi inférieure (12) vers le couvercle (14) pour définir, avec le couvercle (14), des passages d'eau (19a) respectifs ; et des secondes cloisons (20) s'étendant depuis le couvercle (14) vers la paroi inférieure (12) pour définir, avec la paroi inférieure (12), des passages d'eau (20a) respectifs.

11. Machine à café comprenant un filtre à cartouche (1) selon l'une quelconque des revendications 1 à 10.
